Europäisches Patentamt

(19) European Patent Office

Office européen des brevets

(11) Numéro de publication : **0 300 891 B1**

(12) **FASCICULE DE BREVET EUROPEEN**

(45) Date de publication du fascicule du brevet :
**08.01.92 Bulletin 92/02**

(21) Numéro de dépôt : **88401859.9**

(22) Date de dépôt : **19.07.88**

(51) Int. Cl.⁵ : **B32B 17/10,** B60B 33/00,
B60J 1/06, B60J 1/02

(54) **Ensemble pour le montage d'une paire de rouleaux pour le calandrage de vitrages feuilletés et calandreuse équipée de cet ensemble.**

(30) Priorité : **23.07.87 FR 8710464**

(43) Date de publication de la demande :
**25.01.89 Bulletin 89/04**

(45) Mention de la délivrance du brevet :
**08.01.92 Bulletin 92/02**

(84) Etats contractants désignés :
**BE CH DE ES FR GB IT LI LU NL SE**

(56) Documents cités :
**FR-A- 2 592 611**
**GB-A- 1 597 343**
**US-A- 3 250 211**

(73) Titulaire : **SAINT-GOBAIN VITRAGE INTERNATIONAL**
**18, avenue d'Alsace**
**F-92400 Courbevoie (FR)**

(72) Inventeur : **Henquenet, Pierre**
**1 Rue de Savoie**
**F-60150 Thourotte (FR)**

(74) Mandataire : **Muller, René et al**
**SAINT-GOBAIN RECHERCHE 39, quai Lucien Lefranc**
**F-93304 Aubervilliers (FR)**

Jouve, 18, rue Saint-Denis, 75001 PARIS

## Description

La présente invention concerne la fabrication des vitrages feuilletés et notamment l'assemblage des éléments constitutifs d'un vitrage feuilleté par calandrage, c'est-à-dire par passage desdits éléments empilés entre deux séries de rouleaux de pressage. En particulier l'invention concerne un ensemble pour le montage par paires des rouleaux de pressage ainsi que la calandreuse équipée de ces ensembles de montage.

Les dispositifs connus pour ce type d'assemblage sont généralement équipés de deux séries de galets ou rouleaux : une série de rouleaux inférieurs disposés les uns à côté des autres, leur position pouvant être réglée indépendemment de façon à obtenir une courbure correspondant à la courbure transversale désirée qui est généralement la courbure moyenne du vitrage, et une série de rouleaux supérieurs disposés sensiblement de la même façon. Dans les dispositifs connus, les deux séries de rouleaux sont aussi montés sur un cadre pouvant pivoter autour d'un axe horizontal, de sorte que les rouleaux restent perpendiculaires au vitrage durant toute l'opération d'assemblage.

Les rouleaux d'une même série sont disposés les uns à côté des autres de façon très rapprochée, ce qui nécessite généralement leur montage par paires sur un ensemble de réglage permettant le réglage de leur position selon la courbure désirée pour la ligne de pressage. Le montage par paire est réalisé à l'aide d'une chape dont les deux branches entourant les deux rouleaux portent les deux tourillons d'une plaque disposée entre les deux rouleaux, dans un plan parallèle aux plan des rouleaux, cette plaque portant un axe perpendiculaire, autour duquel sont montés mobiles en rotation les deux rouleaux. Dans ce type de montage, la chape entoure plus de la moitié de la périphérie des rouleaux.

Un exemple de ce type de montage est décrit par exemple dans la publication du brevet FR-A-2592611.

Si pour l'assemblage des vitrages présentant des faibles courbures dans la direction longitudinale qui correspond à la direction de déplacement des vitrages entre les deux séries de rouleaux, ce type de montage est satisfaisant, il n'en est pas de même lorsqu'il s'agit d'assembler un vitrage présentant des extrémités fortement courbées. En effet, dans ce cas, l'extrémité avant du vitrage, en sortant de la ligne de pressage, peut venir buter contre la partie arrière de la chape avec tous les inconvénients que cela entraine : casse des vitrages, mauvais assemblage, inaptitude du dispositif à l'assemblage de tous les types de vitrage...

L'invention propose un nouvel ensemble de montage d'une paire de rouleaux de pressage, présentant un très faible encombrement, qui obvie aux inconvénients cités.

L'ensemble de montage selon l'invention comprend deux rouleaux de pressage montés autour d'une chape comprenant :

— une partie permettant le montage desdits rouleaux, entièrement disposée en ceux-ci, cette partie comprenant deux branches portant un axe solidaire d'un croisillon portant les deux rouleaux,

— une partie de la chape destinée à la liaison avec l'ensemble de réglage de la position des rouleaux émergeant de la périphérie des rouleaux,

— et une partie intermédiaire plate disposée entre ces deux parties précédentes.

Selon une caractéristique de l'ensemble de montage, les deux rouleaux de la paire sont montés par l'intermédiaire de roulements sur deux tourillons du croisillon dont un axe perpendiculaire à l'axe des tourillons est porté par deux branches de la chape.

Selon une autre caractéristique de l'ensemble de montage selon l'invention, l'axe du croisillon porté par deux branches de la chape est monté sur des roulements permettant une oscillation de l'équipage mobile formé du croisillon et des deux rouleaux entre les deux branches de la chape et donc un meilleur suivi par les deux rouleaux de petites variations de courbure du vitrage au cours du calandrage.

L'ensemble de montage selon l'invention peut être utilisé dans une calandreuse, pour le montage d'au moins une partie des rouleaux supérieurs et/ou pour le montage d'au moins une partie des rouleaux inférieurs.

D'autres caractéristiques et avantages de l'invention apparaitront dans la suite de la description faite en référence aux figures.

La figure 1 représente dans une vue de face, en élévation, une calandreuse équipée d'ensembles de montage selon l'invention, pour les rouleaux de pressage supérieurs.

La figure 2 représente en section, dans une vue de face, un ensemble de montage pour deux rouleaux de pressage, selon l'invention.

La figure 3 représente, en section dans une vue de côté l'ensemble de montage représenté à la figure 2.

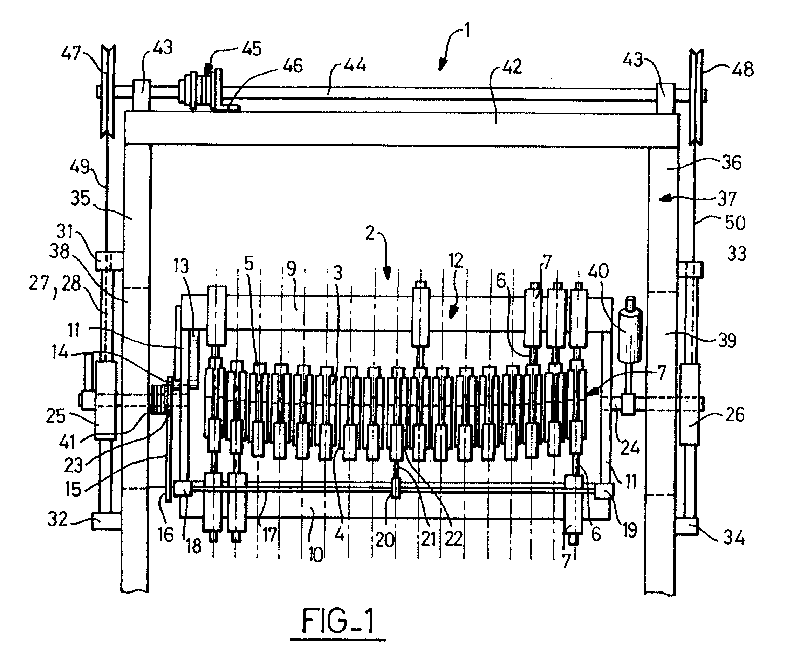

Le dispositif représenté sur la figure 1 est une calandreuse 1 ayant un ensemble mobile 2 comprenant une série de rouleaux supérieurs 3 de pressage et une série de rouleaux inférieurs 4 de pressage. Les rouleaux supérieurs sont montés par paires grâce à l'ensemble de montage 5 décrit ci-après, au bout d'une tige 6 faisant partie d'un ensemble de réglage 7 permettant le réglage de la position d'une paire de rouleaux selon la courbure désirée pour la ligne de pressage, bien que l'on puisse monter les rouleaux inférieurs sur des ensembles de montage conformes à l'invention et semblables à ceux utilisés pour le montage des rouleaux supérieurs, les rouleaux inférieurs 4 sont ici montés par paires, par l'intermédiaire de chapes classiques 8 entourant une partie de la périphérie des rouleaux, au bout de tiges 6 semblables aux précédentes. Les rouleaux supérieurs 3 et les rouleaux inférieurs 4 sont appliqués les uns contre les autres, par des systèmes élastiques faisant partie des ensembles de réglage 7. L'ensemble de réglage 7 peut aussi régler la paire de rouleaux en inclinaison (non représenté sur la figure) pour le disposer perpendiculairement à la courbure transversale désirée. Les ensembles de réglage pour les rouleaux supérieurs 3 sont supportés par une traverse 9 horizontale supérieure. De même, les ensembles de réglage pour les rouleaux inférieurs 4 sont supportés par une traverse horizontale inférieure 10. Les extrémités des traverses supérieure 9 et inférieure 10 sont reliées entre-elles par deux montants 11, de manière à former un cadre 12 entourant l'ensemble des rouleaux de pressage.

Sur le cadre 12 est fixé un moteur électrique 13 actionnant un pignon 14 relié par une chaine 15 à un second pignon 16 disposé au bout d'un arbre 17, monté sur deux paliers 18, 19, solidaires du cadre 12. L'arbre 17 entraine par l'intermédiaire d'un pignon 20 et d'une chaine 21, une paire de rouleaux inférieurs moteurs 22, disposée au centre de la calandreuse.

L'ensemble mobile 2 est monté pivotant autour de deux axes horizontaux et alignés 23, 24, s'emmanchant d'un côté dans les deux montants 11 du cadre, et de l'autre côté dans deux coulisseaux verticaux 25, 26 montés coulissant chacun le long de deux colonnes à billes verticales 27, 28, 29, 30, supportées à leurs extrémités par des barres horizontales 31, 32, 33, 34, fixées aux deux montants latéraux 35, 36 du bâti 37. Des fenêtres 38, 39 sont prévues dans les deux montants 35, 36, pour permettre le passage des deux axes 23, 24 et leur déplacement vertical correspondant au mouvement de montée-baisse de l'ensemble mobile 2. Un contrepoids 40 équilibrant le mouvement de basculement de l'ensemble mobile est monté sur l'axe 24. Bien entendu d'autres contrepoids peuvent être prévus, notamment sur le cadre 12. L'axe 23 porte un frein électromagnétique 41 dont la fonction est de contrôler le mouvement de basculement de l'ensemble mobile. Les deux montants latéraux 35, 36 du bâti sont surmontés d'une traverse horizontale 42 sur laquelle deux paliers 43 portent un arbre horizontal 44. Un frein électromagnétique 45, fixé à une équerre 46, solidaire de la traverse 42, entoure l'arbre 44, et intervient sur la vitesse de montée-baisse de l'ensemble mobile. Aux deux bouts de l'arbre 44, sont montés solidaires en rotation, deux poulies 47, 48. Dans la gorge de chaque poulie s'enroule un cable 49, 50 dont une extrémité est liée à un coulisseau, alors que l'autre extrémité est liée à un contre-poids (non représenté) équilibrant le poids de l'ensemble mobile.

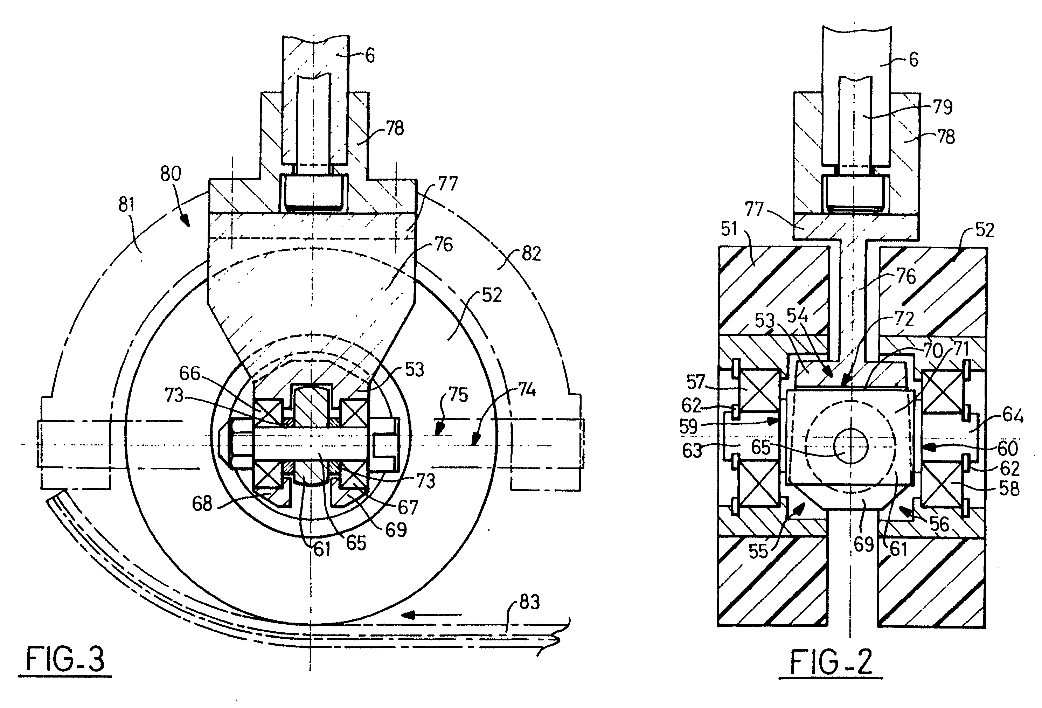

L'ensemble de montage d'une paire de rouleaux est représenté sur les figures 2 et 3.

Les deux rouleaux 51, 52, comprenant généralement une couche externe plus souple que leur couche interne rigide, entourent entièrement la partie inférieure 53 de la chape 54 sur laquelle ils sont montés. A cette fin, leur partie centrale orientée vers l'intérieur présente un évidement 55, 56 approprié. Chaque rouleau est monté par l'intermédiaire d'un roulement à billes 57, 58 pris en sandwich entre le bossage 59, 60 d'un croisillon 61 et des circlips 62 sur les deux tourillons 63, 64 dudit croisillon 61. Le croisillon 61 est solidaire d'un axe 65 porté par l'intermédiaire de deux autres roulements à billes 66, 67 par les deux branches 68, 69 de la partie inférieure 53 de la chape 54.

Ce montage sur roulements autorise une oscillation de l'équipage mobile formé du croisillon et des deux rouleaux 51, 52 par rapport à la direction axiale de la tige 6, et permet ainsi aux rouleaux de suivre les petites variations de courbure du vitrage pour rester sensiblement perpendiculaire à la partie du vitrage sur laquelle ils agissent. Afin de contrôler le débattement angulaire issu de l'oscillation, il est prévu un jeu 70 entre la partie centrale 71 du croisillon et le fond 72 de la chape 54. Le jeu est d'environ 1 mm en ce qui correspond à un débattement angulaire d'environ 5 degrés de part et d'autre de la position axiale. Des cales d'entretoise 73 sont disposées entre les deux roulements 66, 67 et le croisillon. L'axe 74 du débattement est légèrement décalé de l'axe 75 de rotation des deux rouleaux, ceci afin d'introduire un moment de rappel de l'équipage mobile, en position médiane, c'est-à-dire dans l'axe de la tige 6.

La partie inférieure 53 de la chape 54, permettant le montage des deux rouleaux 51, 52 par l'intermédiaire du croisillon 61, est reliée par une partie intermédiaire 76, plate, pour pouvoir s'intercaler entre les deux rouleaux, à la partie supérieure 77, sur laquelle est fixé par des vis un chapeau 78 lui-même relié par l'intermédiaire d'une vis 79 à la tige 6 d'un vérin à ressort (non représenté sur les figures) appartenant au système de réglage de la position des rouleaux.

L'ensemble de montage selon l'invention décrit ci-dessus peut être utilisé dans tous les cas où l'espace environnant les rouleaux doit être libéré le plus possible, notamment dans le cas de l'assemblage de vitrages fortement courbés.

Pour bien mettre en évidence l'espace libéré par le nouvel ensemble de montage, on a représenté en traits mixtes, sur la figure 3, une chape classique 80, dont les branches 81, 82 entourent partiellement les deux rouleaux 51, 52. Un vitrage feuilleté 83 d'extrémité fortement bombée peut dans son mouvement d'avance représenté par la flèche sur la figure 3, venir buter en sortie des rouleaux contre la branche arrière 81 de la chape, alors qu'avec le montage selon l'invention, en particulier la chape disposée à l'intérieur des rouleaux, l'espace entourant les rouleaux est libéré et il n'y a aucun risque d'accrochage du vitrage.

**Revendications**

1. Ensemble de montage d'une paire de rouleaux de pressage (51, 52), notamment pour le pressage des vitrages feuilletés, comprenant une paire de rouleaux (51, 52) montés autour d'une chape (54), caractérisé en ce que la chape (54) comprend :

— une partie (53) permettant le montage desdits rouleaux, entièrement disposée entre ceux-ci, cette partie comprenant deux branches (68, 69) portant un axe (65) solidaire d'un croisillon (61) portant ces deux rouleaux,

— une partie (77) destinée à la liaison avec un ensemble de réglage (7) de la position des rouleaux, cette partie (77) émergeant de la périphérie de ces rouleaux,

— et une partie intermédiaire plate (76).

2. Ensemble selon la revendication 1, caractérisé en ce que les deux rouleaux (51, 52) sont montés par l'intermédiaire de roulements (57, 58) sur deux tourillons (63, 64) du croisillon (61) dont l'axe (65) perpendiculaire à l'axe (75) des tourillons est porté par les deux branches (68, 69) de la chape.

3. Ensemble selon la revendication 2, caractérisé en ce que l'axe (65) est monté sur les deux branches (68, 69) de la chape, par l'intermédiaire d'un système permettant l'oscillation de la paire de rouleaux autour de la direction axiale donnée par l'ensemble de réglage.

4. Ensemble selon la revendication 3, caractérisé en ce que le système permettant l'oscillation est un montage sur roulements (66, 67).

5. Ensemble selon une des revendications 3 à 4, caractérisé en ce que l'oscillation a un débattement contrôlé.

6. Ensemble selon la revendication 5, caractérisé en ce que le débattement est limité par un jeu (70) prévu entre la partie centrale (71) du croisillon (61) et le fond de la chape (54).

7. Ensemble selon une des revendications 2 à 6, caractérisé en ce que l'axe (65) porté par les deux branches de la chape autour duquel s'effectue l'oscillation est décalé de l'axe (75) des tourillons autour duquel s'effectue la rotation des rouleaux, afin d'introduire un moment de rappel de l'équipage mobile formé du tourillon et des rouleaux, vers la position axiale donnée par l'ensemble de réglage.

8. Calandreuse pour le pressage du vitrage feuilleté, caractérisée en ce qu'au moins une partie des rouleaux de pressage supérieurs et/ou inférieurs sont montés par paires sur des ensembles de montage selon une des revendications 1 à 7.

9. Calandreuse pour le pressage des vitrages feuilletés, caractérisée en ce que tous les rouleaux de pressage supérieurs et/ou inférieurs sont montés sur des ensembles de montage selon une des revendications 1 à 7.

**Patentansprüche**

1. System zur Lagerung eines Druckrollenpaares (51, 52), insbesondere zum Pressen von Verbundglas, welches ein Rollenpaar (51, 52) umfaßt, das um ein Gabelelement (54) angeordnet ist, **dadurch gekennzeichnet,** daß das Gabelelement (54) umfaßt

— einen Abschnitt (53), der die Lagerung der Rollen ermöglicht und vollständig zwischen diesen angeordnet ist, wobei dieser Abschnitt zwei eine Achse (65) tragende Schenkel (68, 69) aufweist, die mit einem die beiden Rollen tragenden Kreuzzapfen (61) verbunden ist,

— einen Abschnitt (77) zur Verbindung mit einer Regelungseinrichtung (7) für die Position der Rollen, wobei dieser Abschnitt (77) über den Umfang der Rollen vorsteht,

— sowie einen flachen Zwischenabschnitt (76).

2. System nach Anspruch 1, **dadurch gekennzeichnet,** daß die beiden Rollen (51, 52) durch Lager (57, 58) auf zwei Lagerzapfen (63, 64) des Kreuzzapfens (61) angeordnet sind, dessen Achse (65), die senkrecht zur Achse (75) der Lagerzapfen verläuft, von den beiden Schenkeln (68, 69) des Gabelelements getragen wird.

3. System nach Anspruch 2, **dadurch gekennzeichnet,** daß die Achse (65) an den beiden Schenkeln (68, 69) des Gabelelements mittels eines Systems gelagert ist, das die Schwingung des Rollenpaares um die vom Regelungssystem vorgegebene Axialrichtung ermöglicht.

4. System nach Anspruch 3, **dadurch gekennzeichnet,** daß das die Schwingung ermöglichende System eine Lagervorrichtung (66, 67) ist.

5. System nach einem der Ansprüche 3 bis 4, **dadurch gekennzeichnet,** daß die Schwingung einen kontrollierten Ausschlag aufweist.

6. System nach Anspruch 5, **dadurch gekennzeichnet,** daß der Schwingungsausschlag durch ein Spiel (70) begrenzt ist, das zwischen dem zentralen Abschnitt (71) des Kreuzzapfens (61) und dem Fuß des Gabelements (54) vorgesehen ist.

7. System nach einem der Ansprüche 2 bis 6, **dadurch gekennzeichnet,** daß die von den beiden Schenkeln des Gabelelements getragene Achse (65), um welche die Schwingung ausgeführt wird, bezüglich der Achse (75) der Lagerzapfen, um welche die Rollendrehung ausgeführt wird, versetzt ist, um ein Rücktellmoment des vom Lagerzapfen und den Rollen gebildeten beweglichen Aufbaus in Richtung der vom Regelungssystem vorgegebenen axialen Position einzuführen.

8. Kalandriervorrichtung zum Pressen von Verbundglas, **dadurch gekennzeichnet,** daß mindestens ein Teil der oberen und/oder unteren Druckrollen paarweise an den Lagersystemen nach einem der Ansprüche 1 bis 7 angebracht ist.

9. Kalandriervorrichtung zum Pressen von Verbundglas, **dadurch gekennzeichnet**, daß alle oberen und/oder unteren Druckrollen an den Lagersystem nach einem der Ansrpüche 1 bis 7 angebracht sind.

## Claims

1. Mounting assembly for a pair of pressing rollers (51, 52), notably for pressing laminated panes, comprising a pair of rollers (51, 52) mounted about a fork (54), characterized in that the fork (54) comprises :
    — a part (53) permitting mounting of said rollers and entirely disposed between them, this part comprising two arms (68, 69) carrying an axle (65) integral with a cross-member (61) carrying these two rollers,
    — a part (77) intended for connection with a regulating assembly (7) for the position of the rollers, this part (77) projecting out beyond the periphery of these rollers,
    — and a flat intermediate part (76).

2. Assembly according to Claim 1, characterized in that the two rollers (51, 52) are mounted by means of bearings (57, 58) on two trunnions (63, 64) of the cross-member (61), the axle (65) of which perpendicular to the axle (75) of the trunnions, is carried by the two arms (68, 69) of the fork.

3. Assembly according to Claim 2, characterized in that the axle (65) is mounted on the two arms (68, 69) of the fork by means of a system permitting oscillation of the pair of rollers about the axial direction defined by the regulating assembly.

4. Assembly according to Claim 3, characterized in that the system permitting oscillation is a mounting on bearings (66, 67).

5. Assembly according to one of Claims 3 to 4, characterized in that the oscillation has a controlled range.

6. Assembly according to Claim 5, characterized in that the range is limited by a clearance (70) provided between the central part (71) of the cross-member (61) and the base of the fork (54).

7. Assembly according to one of Claims 2 to 6, characterized in that the axle (65) carried by the two arms of the fork about which the oscillation takes place is offset from the axis (75) of the trunnions about which the rotation of the rollers takes place, in order to create a restoring moment for the movable equipment formed of the trunnion and of the rollers towards the axial position given by the regulating assembly.

8. Calender for pressing the laminated pane, characterized in that at least some of the upper and/or lower pressing rollers are mounted in pairs on mounting assemblies according to one of Claims 1 to 7.

9. Calender For pressing laminated panes, characterised in that all the upper and/or lower pressing rollers are mounted on mounting assemblies according to one of Claims 1 to 7.

FIG_1

FIG-3

FIG-2

EP 0 300 891 B1